# EUROPEAN PATENT SPECIFICATION

(11) **EP 1 145 399 B1**
(45) Date of publication and mention of the grant of the patent: **02.04.2003**
(21) Application number: 00911559.3
(22) Date of filing: 07.01.2000
(51) Int. Cl.: H02G 15/06, H02G 15/068

(54) **A TERMINATION FOR ELECTRICAL CABLE**
ENDVERSCHLUSS FÜR EIN ELEKTRISCHES KABEL
TERMINAISON DE CABLE ELECTRIQUE

(30) Priority: 07.01.1999 GB 9900190
(43) Date of publication of application: 17.10.2001
(73) Proprietor: Pirelli Cables (2000) Limited, London W1K 4QZ (GB)
(72) Inventor: EVANS, Ian, Richard, Bromley, Kent BR1 2WG (GB)
(74) Representative: Abbie, Andrew Kenneth
(86) International application number: US0000295
(87) International publication number: WO00041285

(56) References cited:
- FR-A- 2 423 036
- US-A- 3 446 741
- US-A- 4 418 240
- US-A- 4 943 685

## Description

This invention relates to terminations for electrical power cables, for example, operating at voltages in the range from about 35 kilovolts to 500 kilovolts or above.

When an electrical power cable is connected to an overhead line, a transformer, switchgear, or other equipment, a suitable termination is required to manage the transition of the load-carrying conductor from the environment of the cable in which it is surrounded by high-quality, solid, insulating material of high electrical strength with electrical stress geometry strictly controlled by a concentric earth screen to one in which insulation is mainly provided by air at relatively low stress concentrations and uncontrolled geometry, while protecting the cable end from contamination, and, where applicable, from leakage of insulating fluids.

Typically, these terminations comprise a tubular member, usually of ceramic insulating material, to provide adequate spacing from the high voltage at the end of to earth potential at the screen of the cable. The cable conductor, or an extension of it, runs down the central longitudinal axis of the tubular member, with a stress cone or other means provided in the annular space between the conductor and the tubular member for controlling electrical stress concentrations. Resilient mechanisms may also be provided to ensure that interfaces are under pressure.

While these components fill most of the space inside the tubular member, there are still residual spaces which need to be filled with a material having better electrical properties - primarily breakdown strength, that is the electrical stress concentration at which ionisation occurs leading ultimately to electrical breakdown. - than air, to reduce the risk of electrical breakdown at exposed surfaces. Typically, a suitable insulating fluid such as silicone oil or a compressed gas (for example sulfur hexafluoride) are used, but this increases the cost of making the terminations. It has also been known to use large, moulded, polymer shapes to occupy most of the space.

US-A-3446741 discloses a termination for an electrical power cable including a load carrying conductor, the termination comprising an insulating outer member through which the load carrying conductor runs substantially longitudinally, and means for controlling electrical stress concentrations within the outer member. The residual space within the outer member is filled with a hard set resin containing miscrospheres consisting of an imperforate shell containing an insulating oil. The microspheres serve to reduce thermal stresses in the resin while the resin is in the process of hardening.

US-A-4943685 discloses a termination in which the residual space is filled by an insulating gel formed of an imbitive lightly crosslinked polymer with an insulating fluid trapped in the polymer network thereof. The gel is formed by filling the space with imbiber beads and adding the fluid which trapped in the beads causing the beads to swell and coalesce to form the gel.

PR-A-2423036 discloses the use of a mastic for coating the connection zone of electrical components, the mastic having a non-linear electric resistance.

According to the present invention, there is provided a termination for an electrical power cable including a load carrying conductor, the termination comprising an insulating outer member through which the load carrying conductor, or an extension of it, runs substantially longitudinally, and means for controlling electrical stress concentrations within the outer member, *characterised in that* residual space within the outer member is at least substantially filled by electrically insulating solid granules and interstices between the granules are filled with electrically insulating fluid.

By "granules", there is meant particles having a greatest diameter in the range 0.5 to 8 mm and an aspect ratio not greater than 3.

The granules are preferably of a polymeric material that does not dissolve or swell unduly in the insulating fluid, for example, low density polyethylene, medium density polyethylene, high density polyethylene, polypropylene, ethylene polypropylene rubber or silicone rubber. Alternatively beads of glass, ceramic or epoxy resin could be used.

The invention can bring significant cost savings due to the lower cost per unit volume of the granules compared to that of the insulating fluid, and, as the use of granules removes the requirement for moulding, is less expensive to produce than moulded shapes.

In addition, when granules of higher grade low density polyethylene are used in silicone oil, this can reduce the electrical stress in the fluid due to the lower relative permittivity of the granular material when compared to that of the fluid. Because of this lower electrical stress, higher stress cable designs can be accommodated. As the polymer granules will expand at a lesser rate than the silicone fluid, pressures within the termination will remain lower at high temperatures, which will reduce the risk of leakage. In addition, the polymer granules have a better thermal conductivity than silicone fluid, and hence help reduce the temperature within the terminations, which may improve the service life of the termination.

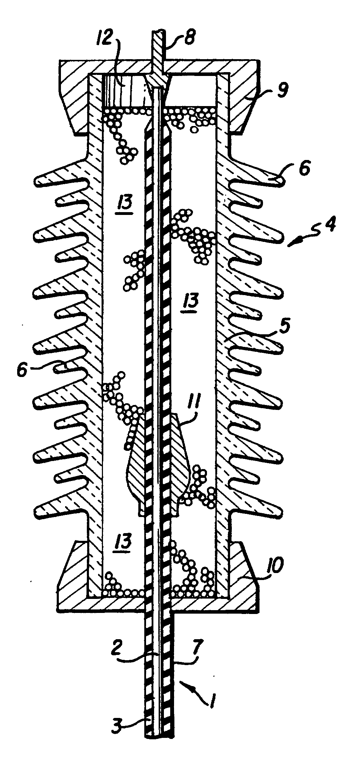

The invention will now be described, by way of example only, with reference to the accompanying drawing, which is a schematic cross-section of a termination for a supertension power cable

A electrical cable 1, for carrying loads of between 66 kilovolts and 500 kilovolts (or above), comprises a load carrying conductor 2, and insulation 3. A termination 4 for the cable comprises a substantially tubular member 5, made of a ceramic insulating material. The tubular member 5 has a number of radially extending flanges 6, commonly referred to as "sheds", to increase the length of the surface leakage path. The cable 1 is stripped back from the top end, exposing the insulation 3 to a position part way up the termination; an earth screen 7 continues on the outside of the insulation from this position. The cable conductor 2 runs along the central axis of the tubular member 5 and enters a connector stalk 8 which passes through a top plate 9. The earth screen 7 passes through a baseplate 10 and finishes under the back of a stress cone 11. The top end of the tubular member 5 may enclose an air gap 12 to accommodate expansion.

The structure of the termination as described so far is that of a known termination, and, as such, its operation is already known to persons skilled in the art; except in so far as it is relevant to the present invention, the termination will not be described in any further detail herein.

The remaining space 13 in the interior of the tubular member 5 is then filled with granules of clean, contaminant free, low density polyethylene, with the interstices between the granules being filled with silicone oil. Ideally the granules would be spherical for easy flow and efficient filling, but granules as marketed for feeding to extruders or moulding machines are satisfactory and more economical: these vary in shape depending on the design of the granulator and the speed at which it is operated, and may be roughly cylindrical or quite irregular. The granules used in the example are irregular in shape and typical granules have mutually perpendicular dimensions averaging about 4.4 by 4.0 by 2.5 mm (aspect ratio 1.8).

In making the termination, the residual spaces are preferably first filled with the granules and then the interstices between the granules filled with the silicone fluid.

As will be understood by persons skilled in the art, various modifications are possible within the scope of the present invention, for example, the use of granules with an insulating fluid can be applicable to other forms of terminations for electrical power cables.

## Claims

1. A termination (4) for an electrical power cable (1) including a load carrying conductor (2), the termination comprising an insulating outer member (5) through which the load carrying conductor, or an extension of it, runs substantially longitudinally, and means (7) for controlling electrical stress concentrations within the outer member, ***characterised in that*** residual space (13) within the outer member is at least substantially filled by electrically insulating solid granules and interstices between the granules are filled with electrically insulating fluid.

2. A termination as claimed in claim 1, wherein the solid granules are of a polymeric material.

3. A termination as claimed in claim 2, wherein the polymer is polyethylene.

4. A termination as claimed in claim 2, wherein the polymer is polypropylene.

5. A termination as claimed in claim 2, wherein the polymer is ethylene-propylene rubber.

6. A termination as claimed in claim 2, wherein the polymer is silicone rubber.

7. A termination as claimed in claim 1 wherein the granules are beads of glass, ceramic or epoxy resin.

8. A termination as claimed in any one of claims 1 to 7, wherein the granules are approximately spherical.

9. A termination as claimed in any one of claims 1 to 7, wherein the granules are approximately cylindrical.

10. A termination as claimed in any one of claims 1 to 7, wherein the granules are irregular in shape.

## Patentansprüche

1. Ein Abschluss (4) für ein elektrisches Energiekabel (1) einschließlich eines lasttragenden Leiters (2), wobei der Abschluss einen isolierenden äußeren Anteil (5) umfasst, durch den der lasttragende Leiter, oder eine Weiterführung dessen im wesentlichen longitudinal verläuft und Einrichtung (7) zum Steuern elektrischer Beanspruchungskonzentrationen innerhalb des äußeren Anteils, **dadurch gekennzeichnet, dass** verbleibender Raum (13) innerhalb des äußeren Anteils zumindest im wesentlichen durch elektrisch isolierende, feste Körnchen gefüllt ist und Zwischenräume zwischen den Körnchen mit elektrisch isolierender Flüssigkeit gefüllt sind.

2. Ein Abschluss nach Anspruch 1, wobei die festen Körnchen aus einem Polymermaterial bestehen.

3. Ein Abschluss nach Anspruch 2, wobei das Polymer Polyäthylen ist.

4. Ein Abschluss nach Anspruch 2, wobei das Polymer ein Polypropylen ist.

5. Ein Abschluss nach Anspruch 2, wobei das Polymer ein Äthylen-Propylen-Kautschuk ist.

6. Ein Abschluss nach Anspruch 2, wobei das Polymer ein Silikon-Kautschuk ist.

7. Ein Abschluss nach Anspruch 1, wobei die Körnchen Kügelchen aus Glas, Keramik oder Epoxydharz sind.

8. Ein Abschluss nach einem der Ansprüche 1 - 7, wobei die Körnchen annähernd kugelförmig sind.

9. Ein Abschluss nach einem der Ansprüche 1 - 7, wobei die Körnchen annähernd zylinderförmig sind.

10. Ein Abschluss nach einem der Ansprüche 1 - 7, wobei die Körnchen unregelmäßig geformt sind.

## Revendications

1. Terminaison (4) pour un câble électrique de puissance (1) comportant un conducteur (2) portant une charge, ladite terminaison comprenant un élément externe isolant (5) que le conducteur portant une charge ou son prolongement traverse pratiquement longitudinalement, et des moyens (7) pour régler les concentrations de contraintes électriques à l'intérieur de l'élément externe, terminaison **caractérisée en ce que** l'espace résiduel (13) à l'intérieur de l'élément externe est rempli au moins en grande partie de granules solides électriquement isolants, et les interstices entre les granules sont remplis d'un liquide électriquement isolant.

2. Terminaison selon la revendication 1, dans laquelle les granules solides sont des granules de polymère.

3. Terminaison selon la revendication 2, pour laquelle le polymère est du polyéthylène.

4. Terminaison selon la revendication 2, pour laquelle le polymère est du polypropylène.

5. Terminaison selon la revendication 2, pour laquelle le polymère est un caoutchouc d'éthylène et de propylène.

6. Terminaison selon la revendication 2, pour laquelle le polymère est un caoutchouc de silicone.

7. Terminaison selon la revendication 1, pour laquelle les granules sont des perles de verre, de céramique ou de résine époxy.

8. Terminaison selon l'une quelconque des revendications 1 à 7, pour laquelle les granules sont approximativement sphériques.

9. Terminaison selon l'une quelconque des revendications 1 à 7, pour laquelle les granules sont approximativement cylindriques.

10. Terminaison selon l'une quelconque des revendications 1 à 7, pour laquelle les granules sont de forme irrégulière.
